# FASCICULE DE BREVET EUROPEEN

(11) **EP 0 886 039 B1**
(45) Date de publication et mention de la délivrance du brevet: **31.10.2001**
(21) Numéro de dépôt: 98401204.7
(22) Date de dépôt: 19.05.1998
(51) Int. Cl.: F01N 3/02, F01N 3/20

(54) **Procédé et ensemble d'élimination des oxydes d'azote présents dans des gaz d'échappement, utilisant un echangeur thermique**
Verfahren und Einrichtung zum Entfernen von Stickstoffoxiden aus Abgasen mittels eines Wärmetauschers
Process and system for eliminating nitrogen oxides out of exhaust gases, using a heat exchanger

(30) Priorité: 16.06.1997 FR 9707555
(43) Date de publication de la demande: 23.12.1998
(73) Titulaire: INSTITUT FRANCAIS DU PETROLE, 92852 Rueil-Malmaison Cedex (FR)
(72) Inventeur: Bouchez, Matthias, 92190 Meudon (FR); Martin, Brigitte, 69230 Saint Genis Laval (FR)

(56) Documents cités:
- DE-A- 3 439 998
- DE-A- 4 410 022
- GB-A- 1 159 061
- US-A- 3 716 344
- US-A- 5 201 802
- PATENT ABSTRACTS OF JAPAN vol. 017, no. 346 (M-1437), 30 juin 1993 & JP 05 044454 A (MITSUBISHI HEAVY IND LTD), 23 février 1993

## Description

La présente invention concerne le domaine du traitement des gaz émis à l'échappement de moteurs a combustion interne et plus particulièrement des moteurs diesel et des moteurs à allumage commandé fonctionnant en mélange pauvre.

De tels moteurs émettent un certain nombre de polluants qu'il est nécessaire d'éliminer et ce d'autant plus efficacement que les normes se sévèrisent en la matière.

Parmi les polluants les plus nombreux et les plus gênants pour l'environnement, on peut citer les oxydes d'azotes.

Il est connu d'éliminer ce type de polluants en faisant passer les gaz d'échappement à travers des catalyseurs (dits *DéNO*ₓ) destinés à convertir les oxydes d'azote. Les catalyseurs connus étant actifs sur une plage de température donnée, on peut être amené à disposer, dans le pot catalytique, plusieurs catalyseurs ayant des formulations différentes c'est-à-dire des plages d'activité différentes. On agrandit ainsi le domaine d'action des éléments catalytiques. Cependant, dans ce contexte, un problème se pose lorsque les gaz d'échappement ne sont pas, au niveau du ou des catalyseurs, dans une plage de température pour laquelle la conversion des oxydes d'azote est suffisante.

Plus précisément, il se pose un problème lorsque l'on dispose par exemple d'un premier catalyseur actif sur une première plage de température et d'un deuxième catalyseur actif sur une deuxième plage de température, et que ces plages sont telles qu'il existe une gamme de températures située entre et au delà des deux plages prédéfinies, gamme pour laquelle la conversion des oxydes d'azote sera faible.

A titre illustratif les formulations utilisées pour les basses températures sont de type Platine/Alumine ou Platine/Zeolithe. Les températures pour lesquelles ces catalyseurs sont les plus actifs sont de 200°C à 250°C.

Les catalyseurs dits "Hautes températures" sont actifs en général entre 300°C et 500°C. Ce sont par exemple des catalyseurs de type Cuivre/Zéolithe.

Il est bien évident qu'entre ces deux plages, c'est-à-dire ici entre 250°C et 300°C aucune conversion des oxydes d'azote ne peut efficacement être réalisée. Au-dessous de 200°C et au delà de 500°C, le même problème existe.

La présente invention permet de résoudre ce type de problème.

Enoncé de façon générale, la présente invention peut être mise en oeuvre dès qu'une ligne d'échappement comprend plusieurs catalyseurs tels qu'il existe des plages de température pour lesquelles la conversion des NOₓ n'est pas suffisante.

On connaît par ailleurs des lignes d'échappement telles que décrites par exemple dans le document DE 4414904, comprenant un échangeur de chaleur à travers lequel tous les gaz d'échappement peuvent être chauffés ou refroidis selon le cas, afin d'optimiser la conversion et de limiter le vieillissement du catalyseur.

Le document DE 4410022 décrit une ligne d'échappement comprenant, elle aussi, un échangeur placé en série, en amont du catalyseur afin de réguler la température du catalyseur.

Le brevet US 3 716 344 décrit un catalyseur de conversion muni d'ailettes et de moyens situés en amont afin de le refroidir si besoin est.

Ces solutions technologiques connues permettent de réguler la température des gaz arrivant sur le catalyseur afin que celui-ci puisse efficacement les convertir et afin de limiter le vieillissement du catalyseur.

Cependant ce type de solution ne permet pas de moduler finement la température des gaz puisque ce sont des systèmes pour lesquels des gaz d'échappement traverse un échangeur thermique avant de passer à travers le catalyseur.

La présente invention répond notamment au problème de l'absence de conversion pour certaines plages de température des gaz d'échappement, plages dans lesquelles aucun des catalyseurs n'est actif.

Une façon originale de résoudre ce problème va être présentée maintenant.

Ainsi, l'objet de l'invention concerne un ensemble d'élimination des oxydes d'azote présents dans les gaz d'échappement issus d'un moteur à combustion interne, ledit ensemble faisant partie de la ligne d'échappement sortant du moteur, et comprenant
- un moyen de conversion des oxydes d'azote,
- un échangeur de chaleur disposé dans une conduite de dérivation située en amont du moyen de conversion, destiné à refroidir lesdits gaz d'échappement.

Selon l'invention, ledit moyen de conversion comprend plusieurs catalyseurs disposés dans la ligne principale d'échappement, lesdits catalyseurs étant actif sur des plages de température non jointives, pour lesquelles la conversion des oxydes d'azote est supérieure à un certain seuil (Cₘᵢₙ) ; en outre au moins une vanne est placée à l'embouchure de la conduite de dérivation afin de moduler le débit de gaz entre ladite conduite de dérivation et la ligne principale, afin que lesdits gaz d'échappement arrivent sur les catalyseurs à une température où l'un desdits catalyseurs est actif.

En outre, l'ensemble selon l'invention peut comprendre un moyen de calcul et de contrôle destiné à commander notamment ladite vanne de régulation du débit.

Par ailleurs, l'ensemble selon l'invention comprend en outre au moins un premier capteur de température placé à la sortie de la dérivation, en amont du ou desdits catalyseurs de conversion, ledit capteur délivrant sa mesure au moyen de calcul et de contrôle.

De façon particulière, l'ensemble selon l'invention comprend en outre un moyen d'injection d'hydrocarbures placé en amont du ou des catalyseurs de conversion des oxydes d'azote, ledit moyen étant relié et commandé par le moyen de calcul et de contrôle.

L'invention vise également un procédé d'élimination des oxydes d'azote présents dans les gaz d'échappement issus d'un moteur à combustion interne consistant à réaliser une conversion catalytique des oxydes d'azote et à refroidir une partie au moins des gaz avant leur conversion grâce à un échangeur de chaleur placé dans une dérivation du flux principal, en amont de la conversion catalytique.

Conformément à l'invention, la conversion est réalisable sur au moins deux plages de température non jointives et l'on contrôle le refroidissement des gaz de telle sorte qu'il ne se produise que lorsque le taux de conversion catalytique est inférieur à une valeur prédéterminée (Cₘᵢₙ), afin que la conversion puisse se réaliser dans l'une des plages de température où l'un des moyens de conversion est actif.

Ainsi le procédé selon l'invention permet d'augmenter l'efficacité du ou des catalyseurs DéNOx par une gestion fine de la température des gaz d'échappement.

Préférentiellement, l'on mesure la température des gaz à la sortie de la dérivation, en amont du catalyseur.

Par ailleurs, l'on contrôle le refroidissement en fonction de ladite température des gaz prise en sortie de la dérivation.

Avantageusement, on injecte des hydrocarbures en amont de la conversion catalytique et on contrôle ladite injection en fonction de la température des gaz en sortie de la dérivation.

Sans sortir du cadre de l'invention, il est possible de contrôler le refroidissement en fonction d'autres paramètres liés au fonctionnement du moteur tels que par exemple la température des gaz à la sortie du moteur, le débit, le couple moteur.

L'invention sera préférentiellement mais non exclusivement utilisée dans des moteurs diesel ou encore dans des moteurs à allumage commandé fonctionnant en mélange pauvre.

D'autres caractéristiques, détails, avantages de l'invention apparaîtront mieux à la lecture de la description qui va suivre, faite à titre illustratif et nullement limitatif, en référence aux figures annexées sur lesquelles :
- La figure 1 est un schéma reprenant les principaux éléments de l'invention; et
- la figure 2 est une courbe donnant le taux de conversion de catalyseur(s) DéNOₓ en fonction de la température des gaz d'échappement prise en amont.

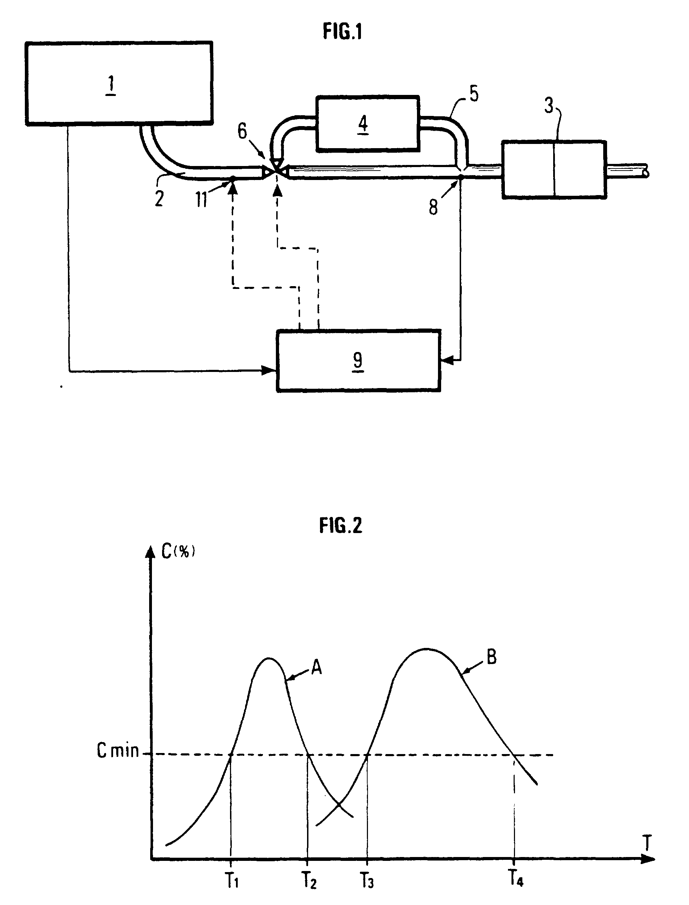

La figure 1 illustre les principaux éléments structurels formant l'ensemble d'élimination des oxydes d'azote selon l'invention.

Un moteur 1 est schématisé avec sa ligne principale d'échappement 2 dans laquelle est mise en oeuvre l'invention.

Un moteur de type diesel ou à allumage commandé fonctionnant en mélange pauvre est très approprié car la réduction des oxydes d'azote en milieu oxydant est difficile.

De façon connue, un ou plusieurs catalyseurs 3 de conversion des oxydes d'azote, couramment appelés catalyseurs DéNOₓ sont placés sur la ligne d'échappement 2. Selon sa formulation, chaque catalyseur agit pour une plage de température spécifique des gaz d'échappement.

Selon l'invention, il est prévu au moins une ligne 5 placée en dérivation de la ligne principale d'échappement 2; à l'intérieur de la ligne 5 est disposé au moins un échangeur de chaleur 4.

La dérivation 5 débouche dans la conduite principale 2 juste en amont des catalyseurs DéNOₓ 3.

En outre, un moyen de vannage 6 est prévu, placé à l'intersection de la ligne principale 2 et de la dérivation 5, côté amont. La vanne 6 est destinée à moduler le débit de gaz entre la ligne principale 2 qui aboutit sur le ou les catalyseurs DéNOx 3 et la dérivation (ou by-pass) équipée de l'échangeur 4.

Le moyen 4 peut permettre le refroidissement des gaz qui passent dans la dérivation 5 lorsque la température des gaz à l'entrée du (ou des) catalyseurs DéNOₓ est telle que celui-ci n'est pas suffisamment actif, c'est-à-dire en dessous d'un certain seuil de conversion Cₘᵢₙ. Un refroidissement: des gaz d'échappement permet alors de se replacer dans une zone où la conversion est supérieure à Cₘᵢₙ comme il va être expliqué plus en détail ci-après.

En outre, au moins un premier capteur de température 8 peut être monté sur la ligne d'échappement principale 2.

Préférentiellement, ledit capteur 8 est placé en amont du (ou des) catalyseur(s) de conversion 3.

Il est relié à un moyen de contrôle et/ou de calcul tel qu'un microprocesseur 9.

Grâce aux informations qu'il reçoit, ainsi qu'à des valeurs mémorisées, le calculateur 9 réagit sur plusieurs éléments ; les lignes fléchées en traits pleins sur la figure 1 symbolisent les informations reçues par le calculateur 9. [I faut ainsi remarquer que ledit calculateur 9 utilise en outre des informations liées au fonctionnement du moteur 1 telle que vitesses, pressions....

Les lignes en pointillé sur la figure 1 représentent les actions de commande du calculateur 9 sur certains éléments : ainsi le calculateur 9 agit sur la vanne 6 de réglage du débit entre ligne principale 2 et dérivation 5.

Sans sortir du cadre de la présente invention, le calculateur peut commander un moyen 11 destiné à injecter une certaine quantité d'hydrocarbures dans la ligne principale 2.

En relation avec la figure 2, le fonctionnement de l'ensemble qui vient d'être décrit va maintenant être expliqué.

Sur le graphe de la figure 2 le taux de conversion (C) des NOₓ par le ou les catalyseurs tels que 3 est donné en fonction de la température (T) des gaz prise juste en amont du ou desdits catalyseurs 3.

Selon cet exemple, deux catalyseurs de formulation différente sont utilisés : l'un donne la courbe A c'est-à-dire qu'il est vraiment actif entre T₁ et T₂. C'est un catalyseur dont la formulation lui permet de réagir aux basses températures.

Le deuxième catalyseur réagit selon la courbe B. c'est-à-dire pour des gaz dont les températures sont comprises entre T₃ et T₄; T₃ lui-même étant supérieur à T₂

Les valeurs T₁, T₂, T₃ et T₄ correspondent à un taux de conversion minimum Cₘᵢₙ.

Lorsque le niveau de température des gaz d'échappement traversant le pot catalytique 3 se situe dans un intervalle T₂, T₃ ou est supérieur à T₄, la totalité ou une partie des gaz d'échappement passe par l'échangeur thermique 4 afin de diminuer la température des gaz qui traversent le catalyseur. La fraction du flux gazeux qui est dérivée sur l'échangeur 4 est définie de façon à obtenir une température de mélange des deux flux située au voisinage de la température maximum de conversion d'une des formulations.

Le calculateur 9, qui reçoit en permanence la température des gaz au niveau du (ou des) catalyseurs 3, permet d'actionner en conséquence la vanne 6.

Par ailleurs, l'efficacité de la réduction des NOₓ sur le catalyseur DéNOₓ 3 dépend de certains paramètres comme la température, la VVH (rapport entre le débit volumique de gaz traversant le catalyseur et le volume de ce catalyseur), le rapport HC/NOₓ. Si la quantité d'hydrocarbures imbrûlés issus de la combustion du moteur n'est pas suffisante, une injection supplémentaire d'hydrocarbures peut être réalisée de telle sorte que l'on soit dans les conditions optimales de réduction des NOₓ. Le moyen 11, commandé par le calculateur 9 permet ce type d'injection.

Dans un moteur à combustion interne, plusieurs zones d'injection peuvent être envisagées sans sortir du cadre de la présente invention :
- en amont de la soupape d'admission de telle sorte que la totalité ou une partie des hydrocarbures injectés se retrouve à l'échappement sous forme d'hydrocarbures imbrûlés.
- Dans la chambre de combustion, elle-même avant ou après l'injection principale de telle sorte que la totalité ou une partie de ces hydrocarbures se retrouve sous forme d'hydrocarbures imbrûlés à l'échappement.
- Dans la ligne d'échappement en amont du catalyseur déNOₓ comme illustré sur la figure 1.

L'invention sera préférentiellement mais non exclusivement utilisée dans des moteurs diesel ou encore dans des moteurs à allumage commandé fonctionnant en mélange pauvre.

## Revendications

1. Ensemble d'élimination des oxydes d'azote présents dans les gaz d'échappement issus d'un moteur (1) à combustion interne, ledit ensemble faisant partie de la ligne d'échappement (2) sortant du moteur, et comprenant
- un moyen de conversion des oxydes d'azote,
- un échangeur de chaleur (4) disposé dans une conduite de dérivation (5) située en amont du moyen de conversion (3), destiné à refroidir lesdits gaz d'échappement:
**caractérisé en ce que** ledit moyen de conversion comprend plusieurs catalyseurs (3) disposés dans la ligne principale d'échappement (2), lesdits catalyseurs étant actif sur des plages de température non jointives, pour lesquelles la conversion des oxydes d'azote est supérieure à un certain seuil (Cₘᵢₙ), et **en ce qu'**au moins une vanne (6) est placée à l'embouchure de la conduite de dérivation (5) afin de moduler le débit de gaz entre ladite conduite de dérivation (5) et la ligne principale (2), afin que lesdits gaz d'échappement arrivent sur les catalyseurs (3) à une température où l'un desdits catalyseurs est actif.

2. Ensemble selon la revendication 1, **caractérisé en ce qu'**il comprend en outre un moyen (9) de calcul et de contrôle destiné à commander notamment ladite vanne (6).

3. Ensemble selon l'une quelconque des revendications précédentes, **caractérisé en ce qu'**il comprend en outre au moins un premier capteur de température (8) placé à la sortie de la dérivation (5), en amont du ou desdits catalyseurs de conversion (3), ledit capteur (8) délivrant sa mesure au moyen de calcul et de contrôle (9).

4. Ensemble selon l'une quelconque des revendications 2 ou 3, **caractérisé en ce qu'**il comprend en outre un moyen d'injection d'hydrocarbures (11) placé en amont du ou desdits catalyseurs, ledit moyen étant relié et commandé par le moyen de calcul et de contrôle (9).

5. Procédé d'élimination des oxydes d'azote présents dans les gaz d'échappement issus d'un moteur (1) à combustion interne, consistant à réaliser une conversion catalytique des oxydes d'azote et à refroidir une partie au moins des gaz avant leur conversion grâce à un échangeur de chaleur (4) placé dans une dérivation (5) du flux principal (2), en amont de la conversion catalytique (3), **caractérisé en ce que** la conversion est réalisable sur au moins deux plages de température non jointives et **en ce que** l'on contrôle le refroidissement des gaz de telle sorte qu'il ne se produise que lorsque le taux de conversion catalytique est inférieur à une valeur prédéterminée (Cₘᵢₙ), afin que la conversion puisse se réaliser dans l'une des plages de température où l'un des moyens de conversion est actif.

6. Procédé selon la revendication 5, **caractérisé en ce que** l'on mesure la température des gaz à la sortie de la dérivation, en amont de la conversion catalytique.

7. Procédé selon la revendication 6, **caractérisé en ce que** l'on contrôle le refroidissement en fonction de ladite température des gaz prise en sortie de la dérivation.

8. Procédé selon l'une quelconque des revendications 5 à 7, **caractérisé en ce que** l'on contrôle le refroidissement en fonction de la température des gaz prise à la sortie du moteur, du débit, du couple-moteur... .

9. Procédé selon l'une quelconque des revendications 5 8, **caractérisé en ce que** l'on injecte des hydrocarbures en amont de la conversion catalytique et **en ce que** l'on contrôle ladite injection en fonction de la température des gaz en sortie de la dérivation.

10. Utilisation de l'ensemble selon l'une des revendications 1 à 4 et du procédé selon l'une des revendications 5 à dans des moteurs diesel ou à allumage commandé fonctionnant en mélange pauvre.

## Patentansprüche

1. Einrichtung zum Entfernen der in Abgasen eines Motors (1) mit innerer Verbrennung vorhandenen Stickoxide, wobei die Einrichtung Teil der den Motor verlassenden Auspuffleitung (2) ist und umfasst
- ein Mittel zur Umwandlung der Stickoxide
- einen Wärmeaustauscher (4), der in einer Parallelleitung (5) vor dem Umwandlungsmittel (3) angeordnet ist und dazu bestimmt ist, die Abgase zu kühlen:
**dadurch gekennzeichnet, dass** dieses Umwandlungsmittel mehrere Katalysatoren (3) umfasst, die in der Hauptauslassleitung (2) angeordnet sind, wobei diese Katalysatoren in aneinander nicht angrenzenden Temperaturbereichen aktiv sind, für die die Umwandlung der Stickoxide höher als ein gewisser Schwellenwert (Cₘᵢₙ) liegt und dass wenigstens ein Ventil (6) an der Einmündung der Parallelleitung (5) angeordnet ist, um den Gasdurchsatz zwischen dieser Parallelleitung (5) und der Hauptleitung (2) zu modulieren, derart, **dass** die Auslass- oder Auspuffgase an den Katalysatoren (3) bei einer Temperatur ankommen, wo einer dieser Katalysatoren aktiv ist.

2. Einrichtung nach Anspruch 1, **dadurch gekennzeichnet, dass** sie im übrigen ein Rechner- und Regelmittel umfasst, das dazu bestimmt ist, insbesondere dieses Ventil (6) zu steuern.

3. Einrichtung nach einem der vorhergehenden Ansprüche, **dadurch gekennzeichnet, dass** sie im übrigen wenigstens einen ersten Temperaturgeber (8) umfasst, der am Austritt der Parallelleitung (5) vor dem oder den Umwandlungskatalysatoren (3) angeordnet ist, wobei dieser Geber seine Messungen dem Rechner- und Regelmittel (9) liefert.

4. Einrichtung nach einem der Ansprüche 2 oder 3, **dadurch gekennzeichnet, dass** sie im übrigen ein Mittel zum Einführen von Kohlenwasserstoffen (11) umfasst, das vor dem oder den Katalysatoren angeordnet ist, wobei dieses Mittel verbunden ist mit und gesteuert ist durch das Rechner- und Regelmittel (9).

5. Verfahren zur Eliminierung der in den Abgasen einer Brennkraftmaschine (1) vorhandenen Stickoxide, darin bestehend, eine katalytische Umwandlung der Stickoxide herbeizuführen und wenigstens einen Teil der Gase vor deren Umwandlung dank eines Wärmeaustauschers (4) zu kühlen, der in einer Parallelanordnung (5) zum Hauptstrom (2) vor der katalytischen Umwandlung (3) angeordnet ist, **dadurch gekennzeichnet, dass** die Umwandlung an wenigstens zwei aneinander nicht angrenzenden Temperaturbereichen durchführbar ist und dass man die Kühlung der Gase derart regelt, dass sie sich nur einstellt, wenn der Grad der katalytischen Umwandlung geringer als ein vorbestimmter Wert (Cₘᵢₙ) ist, damit die Umwandlung in einem der Temperaturbereiche stattfinden kann, wo eines der Umwandlungsmittel aktiv ist.

6. Verfahren nach Anspruch 5, **dadurch gekennzeichnet, dass** man die Temperatur der Gase am Austritt der Parallelführung vor der katalytischen Umwandlung misst.

7. Verfahren nach Anspruch 6, **dadurch gekennzeichnet, dass** man die Kühlung als Funktion der Temperatur der Gase, die am Austritt der Parallelführung genommen wird, regelt.

8. Verfahren nach einem der Ansprüche 5 bis 7, **dadurch gekennzeichnet, dass** man die Kühlung als Funktion der am Austritt aus dem Motor genommenen Temperatur der Gase, des Durchsatzes, des Motordrehmoments ... regelt.

9. Verfahren nach einem der Ansprüche 5 bis 8, **dadurch gekennzeichnet, dass** man Kohlenwasserstoffe vor der katalytischen Umwandlung einführt und **dass** man diese Einführung oder Injektion als Funktion der Temperatur der Gase am Austritt der Parallelführung regelt.

10. Anwendung der Einrichtung nach einem der Ansprüche 1 bis 4 und des Verfahrens nach einem der Ansprüche 5 bis 9 bei Dieselmotoren oder bei Motoren mit gesteuerter Zündung, die mit magerem Gemisch betrieben werden.

## Claims

1. Assembly for the elimination of nitrogen oxides present in the exhaust gases from an internal combustion engine (1), the said assembly forming part of the exhaust line (2) leaving the engine, and comprising:
- a means for converting nitrogen oxides,
- a heat-exchanger (4) arranged in a bypass conduit (5) situated upstream of the conversion means (3), intended to cool the said exhaust gases:
**characterised by** the fact that the said conversion means comprises a plurality of catalysts (3) arranged in the main exhaust line (2), the said catalysts being active over non-contiguous temperature ranges, for which the conversion of the nitrogen oxides is greater than a certain threshold (Cₘᵢₙ), and **by** the fact that at least one valve (6) is placed at the mouth of the bypass conduit (5) in order to modulate the flow-rate of gas between the said bypass conduit (5) and the main line (2), so that the said exhaust gases arrive on the catalysts (3) at a temperature at which one of the said catalysts is active.

2. Assembly as described in claim 1, **characterised by** the fact that it also comprises a means (9) for calculation and control intended in particular to control the said valve (6).

3. Assembly as described in any one of the preceding claims, **characterised by** the fact that it also comprises at least a first temperature sensor (8) placed at the outlet of the bypass (5), upstream of the said conversion catalyst or catalysts (3), the said sensor (8) delivering its measurement to the means for calculation and control (9) .

4. Assembly as described in either of claims 2 or 3, **characterised by** the fact that it also comprises a means for injection of hydrocarbons (11) placed upstream of the said catalyst or catalysts, the said means being connected and controlled by the means for calculation and control (9).

5. Process for elimination of nitrogen oxides present in the exhaust gases from an internal combustion engine (1), consisting of performing a catalytic conversion of the nitrogen oxides and cooling at least a part of the gases before their conversion by means of a heat exchanger (4) placed in a bypass (5) of the main flow (2), upstream of the catalytic conversion (3), **characterised by** the fact that the conversion is performable over at least two non-contiguous temperature ranges and **by** the fact that the cooling of the gases is so controlled that it only occurs when the rate of catalytic conversion is lower than a predetermined value (Cₘᵢₙ), so that the conversion can occur in one of the temperature ranges in which one of the conversion means is active.

6. Process as described in claim 5, **characterised by** the fact that the temperature of the gases is measured at the outlet of the bypass, upstream of the catalytic conversion.

7. Process as described in claim 6, **characterised by** the fact that the cooling is controlled as a function of the said temperature of the gases taken at the outlet of the bypass.

8. Process as described in any one of claims 5 to 7, **characterised by** the fact that the cooling is controlled as a function of the temperature of the gases taken at the outlet of the engine, of the flow-rate, of the engine torque... .

9. Process as described in any one of claims 5 to 8, **characterised by** the fact that hydrocarbons are injected upstream of the catalytic conversion and **by** the fact that the said injection is controlled as a function of the temperature of the gases at the outlet of the bypass.

10. Use of the assembly as described in one of claims 1 to 4 and of the process as described in one of claims 5 to 9 in diesel engines or controlled ignition engines operating with a lean mixture.
